(19) Europäisches Patentamt
European Patent Office
Office européen des brevets

(11) Veröffentlichungsnummer: **0 393 518 A2**

(12) # EUROPÄISCHE PATENTANMELDUNG

(21) Anmeldenummer: **90107056.5**

(22) Anmeldetag: **12.04.90**

(51) Int. Cl.5: **C08L 23/02, C08K 5/5333, //(C08L23/02,C08K5:5333)**

(30) Priorität: **19.04.89 DE 3912825**

(43) Veröffentlichungstag der Anmeldung: **24.10.90 Patentblatt 90/43**

(84) Benannte Vertragsstaaten: **BE DE ES FR GB IT NL**

(71) Anmelder: **HOECHST AKTIENGESELLSCHAFT**
**Postfach 80 03 20**
**D-6230 Frankfurt am Main 80(DE)**

(72) Erfinder: **Bonnke, Martin, Dr.**
**Im Lerchenfeld 47**
**D-6234 Hattersheim am Main(DE)**
Erfinder: **Bothe, Lothar, Dr.**
**Am Heiligenhaus 9**
**D-6500 Mainz(DE)**

(54) **Polyolefin-Formmasse.**

(57) Bei der Verarbeitung von 1-Olefin-homo- und -copolymerisaten wird die Korrosion an den Verarbeitungsmaschinen vermindert, wenn man dem Polymer vor der Verarbeitung ein Phosphonat der Formel

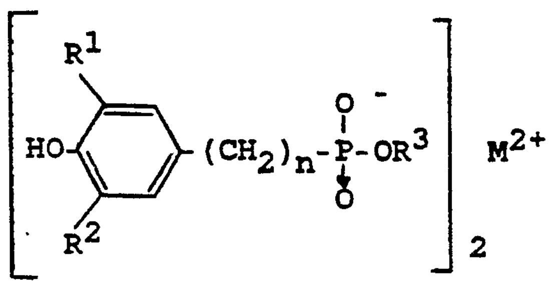

zusetzt. Die Formmasse läßt sich zu einwandfreien transparenten Formkörpern, wie Folien und Fasern, verarbeiten.

EP 0 393 518 A2

## Polyolefin-Formmasse

Die Erfindung bezieht sich auf eine Polyolefin-Formmasse, welche bei der Verarbeitung weniger Korrosion an den Verarbeitungsmaschinen bewirkt.

Bei der Verarbeitung von Polyolefin-Formmassen zu Formteilen tritt häufig Korrosion an den Metallteilen auf, die mit der heißen Formmasse in Berührung kommen. Es hat daher nicht an Versuchen gefehlt, diesen Mangel zu beseitigen.

Es ist bekannt, derartigen Formmassen Zinkstearat oder Calciumstearat zur Verminderung der Korrosion an den Verarbeitungsmaschinen zuzusetzen. Allerdings kommt es bei der Verarbeitung zu unerwünschten Ablagerungen an Maschinenteilen und/oder Auftreten von Dämpfen, was zu Schwierigkeiten in der Produktion führt. Beim Abkühlen der Formteile mit Wasser kommt es zum Mitschleppen von Wasser (water carry-over). Dieser Effekt führt zur Qualitätsminderung der Oberflächen sowie zu Produktionsstörungen.

Es ist weiterhin bekannt, anorganische Stoffe wie Hydrotalcite vom Typ $Mg_{4,5}Al_2(OH)_3CO_3 \cdot 3,5H_2O$ zur Vermeidung der Korrosion einzusetzen. Derartige pulverförmige, anorganische Zusätze sind allerdings schwierig in Polyolefine einzuarbeiten und führen weiterhin zu qualitätsmindernden Stippen, die insbesondere bei transparenten Formkörpern stark stören. Weiterhin wird bei Einsatz von Hydrotalciten die Farbqualität verschlechtert (Vergilbung).
Es wurde nun gefunden, daß eine Polyolefin-Formmasse, welche eine sehr geringe Menge eines speziellen Phosphonates enthält, bei Verarbeitung auf Maschinen weniger Korrosion an den Maschinenteilen bewirkt.

Die Erfindung betrifft somit eine Polyolefin-Formmasse, bestehend aus einem Homo- oder Copolymerisat eines 1-Olefins mit 2 bis 10 C-Atomen, und 0,001 bis 0,5 Gew.-%, bezogen auf das Polyolefin, eines Phosphonates der Formel

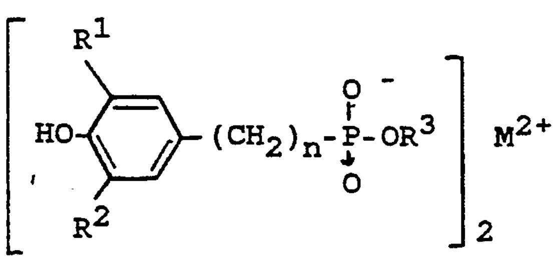

,

worin $R^1$ und $R^2$ gleich oder verschieden sind und ein Wasserstoffatom oder eine geradkettige oder verzweigte $C_1$-$C_6$-Alkylgruppe, $R^3$ eine geradkettige $C_1$-$C_6$-Alkylgruppe, n 1, 2, 3 oder 4 und M Zink, Magnesium, Calcium, Barium oder Blei bedeuten.

Für die erfindungsgemäße Polyolefin-Formmasse eignen sich als Basispolymere Homo- oder Copolymerisate von 1-Olefinen mit 2 bis 10 Kohlenstoffatomen, beispielsweise Ethylen, Propylen, Buten-1, 4-Methylpenten-1. Infrage kommen somit Polyethylen, Polypropylen, Polybuten-1, Poly-4-methylpenten-1, Ethylen-Propylen-Copolymerisate, Ethylen-Propylen-Buthylen-Copolymerisate, Propylen-Butylen-Copolymerisate, Ethylen-Butylen-Copolymerisate, sowie Gemische dieser Polymerisate. Vorzugsweise werden Propylenpolymerisate, insbesondere Propylenhomopolymerisate, eingesetzt. Das Polymerisat ist in der Formmasse zu 99,5 bis 99,999 Gew.-% enthalten.

Das in der Formmasse zum Einsatz kommende Phosphonat besitzt die Formel

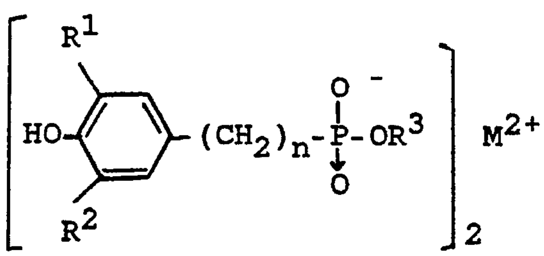

,

worin $R^1$ und $R^2$ gleich oder verschieden sind und ein Wasserstoffatom oder eine geradkettige oder verzweigte $C_1$-$C_6$-Alkylgruppe, beispielsweise Methyl, Ethyl, t-Butyl, i-Amyl, vorzugsweise t-Butyl, $R^3$ eine geradkettige $C_1$-$C_6$-Alkylgruppe, beispielsweise Methyl, Ethyl, Propyl, Butyl, Amyl, n 1, 2, 3 oder 4 und M Zink, Magnesium, Calcium, Barium oder Blei, vorzugsweise Calcium, bedeuten.

Von den erfindungsgemäß zu verwendenden Phosphonaten werden vorzugsweise die Mg- und Ca-phosphonate eingesetzt. Insbesondere wird Calcium-bis-3,5-di-tert.butyl-4-hydroxybenzyl-monoalkyl- oder Magnesium-bis-3,5-di-tert.butyl-4-hydroxybenzyl-monoalkyl-phosphonat eingesetzt. Die Phosphonatmenge beträgt 0,001 bis 0,5, vorzugsweise 0,01 bis 0,04 Gew.-%, bezogen auf das Polyolefin.

Die erfindungsgemäße Formmasse kann die üblichen, die Verarbeitung erleichternden und die physikalischen Eigenschaften verbessernden Zusatzstoffe enthalten. Als solche sind zu nennen: Antioxidantien, Antistatika, Gleitmittel, Nukleierungsmittel, Antiblockmittel sowie Füllstoffe (organische und/oder anorganische), Farbpigmente, Farbstoffe, synthetische und natürliche Harze und Flammschutzmittel. Die erste Gruppe ist in der Formmasse im allgemeinen in einer Menge von 0,1 bis 5 Gew.-%, berechnet auf die Menge Polymer (+Füllstoff), enthalten. Füllstoffe, Farbpigmente, synthetische und natürliche Harze und Flammschutzmittel werden in einer Menge entsprechend den bestehenden Bedürfnissen eingesetzt.

Das Einarbeiten des Phosphonats in das Polyolefin geschieht auf bekannte Weise, beispielsweise mittels Mischer, Extruder, Walze, Kneter, insbesondere mittels Zweischneckenkneter, wobei bei der Einarbeitung auch ein Masterbatch des Phosphonats eingesetzt werden kann. Als Masterbatchträger eignen sich übliche Träger, beispielsweise Träger auf PE- oder PP-Wachsbasis. Die Einarbeitung des Phosphonats wird vorzugsweise so ausgeführt, daß es während der Einarbeitung zum Aufschmelzen des Phosphonats kommt.

Die erfindungsgemäße Formmasse wird für transparente Formkörper wie beispielsweise Folien, Becher, Flaschen oder Fäden verwendet. Bei der Verarbeitung dieser Formmasse war die Korrosion an den Verarbeitungsmaschinen äußerst gering, aus dem Kühltrog wurde kein Wasser mitgeschleppt und es wurden keine Ablagerungen und Ausdampfungen beobachtet.

Die nachfolgenden Beispiele sollen die Erfindung erläutern.

**Beispiele 1 und 2 und Vergleichsbeispiele A bis D**

In Polypropylenpulver (Schmelzindex 2,16/230 4,5 g/10 min -n-heptanunlöslicher Anteil 96 Gew.-% - Schmelzpunkt 165 °C) wurden mittels eines Extruders unterschiedliche Mengen Calcium-bis-3,5-di-t.butyl-4-hydroxybenzyl-monoethylphosphonat eingearbeitet.

In den Vergleichsbeispielen wurden an Stelle des Calcium-bis-3,5-di-t.butyl-4-hydroxybenzyl-monoethylphosphonats unterschiedliche Mengen Calciumstearat eingearbeitet.

Bei allen Versuchen wurde 0,1 Gew.-% Pentaerythrityl-tetrakis(3(3,5-di-t.butyl-4-hydroxyphenyl)-propionat) zur Stabilisierung des Polypropylens eingesetzt.

Zur Bestimmung des Korrosionswertes der Materialien wurden jeweils 2 Eisenblättchen von 0,2 mm Stärke in die Formmassen-Proben so eingelegt, daß sie gleichmäßig von der Formmasse umgeben waren. Dazu wurde in die Aussparung ($\phi$ 50 mm) eines 4 mm-Abstands-Rahmens etwa die Hälfte der abgewogenen Materialmengen (6 g) eingefüllt und die Blättchen mit der Pinzette so nebeneinander gelegt, daß sie sich weder gegenseitig noch den Rahmen berührten. Die Eisenblättchen waren ca. 20 mm lang und wurden in Aceton aufbewahrt, nachdem sie durch Abreiben in Aceton entfettet wurden. Vor dem Einlegen waren sie mit einem weichen Läppchen vom Aceton zu befreien. Die Eisenblättchen dürfen nicht mit den Fingern berührt werden.

Abstandsrahmen und Abdeckbleche (Aluminiumfolien) wurden in eine auf 250 °C aufgeheizte Presse gelegt und nach 5 min Kontaktzeit 1 h unter einem Druck von 100 bar verpreßt. Vorher wurde die 0,5 mm starke Aluminiumfolie, die zwischen Deckplatte und Abstandsrahmen eingefügt war, mit Vaseline eingerieben, um das Festkleben des Produktes an der Aluminiumfolie herabzusetzen. Danach wurde die Presse sofort abgekühlt. Die Eisenblättchen müssen noch nebeneinander liegen und dürfen nicht aus der Platte herausragen. Sie wurden aus der Platte herausgestanzt, gelocht und auf 1/10 mg genau gewogen. Selbstverständlich dürfen sie nicht mit der Hand berührt werden. Danach hängte man sie aufgereiht auf einen Kupferdraht in den Dampfstrom siedenden Wassers. Oberhalb der Wasseroberfläche befand sich ein Sieb, um zu verhindern, daß sich Wassertröpfchen an den Blättchen absetzten. Nach 1 h wurden die Eisenblättchen entnommen, bei Raumtemperatur 1 h gelagert und dann erneut gewogen. Die Gewichtszunahme in Prozent ergibt den Korrosionswert.

Das Auftreten von Ablagerungen/Ausdampfungen und Wassermitschleppen wurde während der Verarbeitung der Formmassen auf einer Hochleistungsbändchenanlage mit Wasserabkühlung beurteilt. Die Abzugsgeschwindigkeit betrug bei allen Verarbeitungsversuchen 40 m/min. Bei Flachfolienbändchenanlagen

mit Wasserabkühlung stellen Ablagerungen/Ausdampfungen sowie insbesondere das Mitschleppen von Wasser (water carry-over) mit der Primärfolie einen wesentlichen qualitativen Mangel dar. Das Auftreten von Ablagerungen/Ausdampfungen und die Wassermitnahme führen zur Verschlechterung der Wirtschaftlichkeit. Insbesondere das Mitschleppen von Wasser führt zu einer erhöhten Abrißquote, d.h. der Erhöhung der Abrißzahl pro Produktionszeit.
Nähere Angaben zu den Beispielen und den Vergleichsbeispielen sowie ihrer Beurteilung sind in der Tabelle zu finden.

| Beispiel/Vergleichsbeispiel | W1 [Gew.-%] | W2 [Gew.-%] | Korrosionswert | Wassermitnahme | Ablagerungen/Ausdampfungen |
|---|---|---|---|---|---|
| 1 | 0,02 | - | 0,11 | keine | + + |
| 2 | 0,04 | - | 0,06 | keine | + + |
| A | - | 0,02 | 0,26 | stark | -- |
| B | - | 0,04 | 0,21 | stark | -- |
| C | - | 0,08 | 0,13 | stark | -- |
| D | - | - | 0,30 | keine | + + |

W1 = Zusatzmenge an Calcium-bis-3,5-di-t.butyl-4-hydroxybenzyl-monoethyl-phosphonat

W2 = Calciumstearatzusatz

Der Korrosionswert muß kleiner als 0,15 sein.

+ + keine Störungen der Produktion durch Ablagerungen/Ausdampfungen, die Reinigungsarbeiten notwendig machen

-- störende Ablagerungen/Ausdampfungen, die Prokuktionsunterbrechungen verursachen

Alle Primärfolien (Beipiele und Vergleichsbeispiele A bis D) zeigten mit Ausnahme vereinzelter Gelteilchenstippen keine weiteren Stippen.

## Ansprüche

1. Polyolefin-Formmasse, bestehend aus einem Homo- oder Copolymerisat eines 1-Olefins mit 2 bis 10 C-Atomen, und 0,001 bis 0,5 Gew.-%, bezogen auf das Polyolefin, eines Phosphonates der Formel

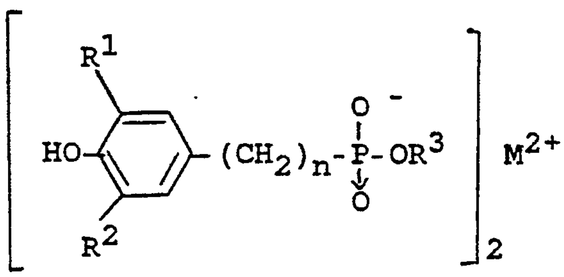

,

worin $R^1$ und $R^2$ gleich oder verschieden sind und ein Wasserstoffatom oder eine geradkettige oder verzweigte $C_1$-$C_6$-Alkylgruppe, $R^3$ eine geradkettige $C_1$-$C_6$-Alkylgruppe, n 1, 2, 3 oder 4 und M Zink, Magnesium, Calcium, Barium oder Blei bedeuten.

2. Polyolefinformmasse nach Anspruch 1, dadurch gekennzeichnet, daß das 1-Olefinpolymerisat Polypropylen, Polyethylen oder ein Propylen-1-Olefinpolymerisat mit Ethylen oder Butylen als 1-Olefin ist.

3. Polyolefin-Formmasse nach Anspruch 1, dadurch gekennzeichnet, daß das Phosphonat ein Calcium- oder Magnesium-bis-3,5-di-t.butyl-4-hydroxybenzyl-monoethylphosphonat ist.

4. Verwendung der Polyolefin-Formmasse nach Anspruch 1 für die Herstellung von transparenten Formkörpern.

5. Verfahren zur Verminderung der Korrosion an den Maschinen bei der Verarbeitung von Homo- oder Copolymerisaten eines 1-Olefins mit 2 bis 10 C-Atomen durch Zusatz von 0,001 bis 0,05 Gew.-% eines Phosphonats der Formel

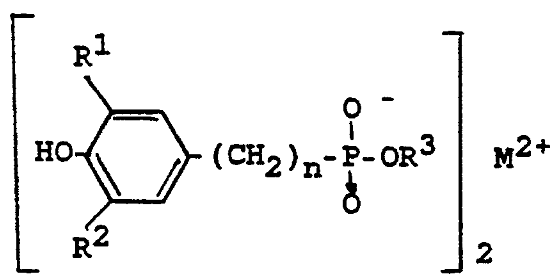

,

worin $R^1$ und $R^2$ gleich oder verschieden sind und ein Wasserstoffatom oder eine geradkettige oder verzweigte $C_1$-$C_6$-Alkylgruppe, $R^3$ eine geradkettige $C_1$-$C_6$-Alkylgruppe, n 1, 2, 3 oder 4 und M Zink, Magnesium, Calcium, Barium oder Blei bedeuten.

Patentanspruch für folgenden Vertragsstaat: ES

Verfahren zur Verminderung der Korrosion an den Maschinen bei der Verarbeitung von Homo- oder Copolymerisaten eines 1-Olefins mit 2 bis 10 C-Atomen durch Zusatz von 0,001 bis 0,05 Gew.-% eines Phosphonats der Formel

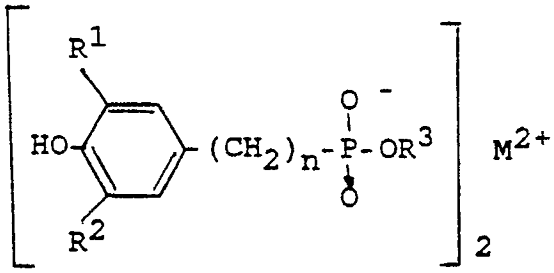

,

worin $R^1$ und $R^2$ gleich oder verschieden sind und ein Wasserstoffatom oder eine geradkettige oder verzweigte $C_1$-$C_6$-Alkylgruppe, $R^3$ eine geradkettige $C_1$-$C_6$-Alkylgruppe, n 1, 2, 3 oder 4 und M Zink, Magnesium, Calcium, Barium oder Blei bedeuten.